Europäisches Patentamt

European Patent Office

Office européen des brevets

(11) Numéro de publication: **0 427 653 A1**

## DEMANDE DE BREVET EUROPEEN

(21) Numéro de dépôt: 90460040.0

(22) Date de dépôt: 07.11.90

(51) Int. Cl.5: **H04N 7/13**

(30) Priorité: 08.11.89 FR 8914821

(43) Date de publication de la demande:
15.05.91 Bulletin 91/20

(84) Etats contractants désignés:
DE GB NL

(71) Demandeur: ETAT FRANCAIS représenté par
le Ministre des PTT (Centre National
d'Etudes des Télécommunications)
38-40 rue du Général Leclerc
F-92131 Issy-les-Moulineaux(FR)

Demandeur: **TELEDIFFUSION DE FRANCE S.A.**
**21-27, rue Barbès**
**F-92542 Montrouge Cedex(FR)**

(72) Inventeur: **Henot, Jean-Pierre**
**La Touche Martin**
**F-35510 Thorigne Fouillard(FR)**

(74) Mandataire: **Corlau, Vincent**
**c/o Cabinet Vidon Immeuble Germanium 80**
**avenue des Buttes de Coesmes**
**F-35700 Rennes(FR)**

(54) Système de compression d'images numériques appartenant à une séquence d'images, à quantification adaptative en fonction d'une transformation psychovisuelle.

(57) Le domaine de l'invention est celui de la compression d'images numériques appartenant à une séquence d'images. L'invention s'applique notamment à la transmission d'images sur canaux numériques, ainsi qu'aux dispositifs de stockage d'images.

Plus précisément, l'invention a pour objectif de fournir un système de compression d'images tenant compte d'un critère psychovisuel pour l'étape de compression du signal par quantification de coefficients transformés de blocs découpés dans l'image.

Le système de l'invention est du type comprenant un module de codage de blocs d'image par transformation mathématique coopérant avec un module de quantification de la valeur de chaque coefficient des blocs d'image transformés, caractérisé en ce que ledit module de quantification comprend des moyens de calcul (59,60) du nombre de niveaux de quantification (55) des coefficients (53) en fonction d'une information psychovisuelle, telle qu'une information d'amplitude du mouvement (54) associée audit bloc d'image.

Fig. 3

## SYSTÈME DE COMPRESSION D'IMAGES NUMÉRIQUES APPARTENANT À UNE SÉQUENCE D'IMAGES, À QUANTIFICATION ADAPTATIVE EN FONCTION D'UNE INFORMATION PSYCHOVISUELLE.

Le domaine de l'invention est celui de la compression d'images numériques appartenant à une séquence d'images. L'invention s'applique notamment à la transmission d'images sur canaux numériques, ainsi qu'aux dispositifs de stockage d'images.

Plus précisément, l'invention concerne un système de compression d'images numériques, du type consistant à découper des blocs dans l'image et à appliquer une transformation réversible sur chaque bloc, dans lequel la compression est optimisée notamment par régulation adaptative de la quantification des coefficients des blocs transformés.

L'invention peut être mise en oeuvre pour la transmission de signaux de télévision. Elle peut par exemple être utilisée dans les studios de télévision, où la transmission et les différents traitements sont de plus en plus réalisés de façon numérique. Elle s'applique également à la transmission de signaux numériques d'images par voie hertzienne.

Un autre domaine d'application de l'invention est la transmission sur le réseau commuté, en particulier par l'intermédiaire du réseau RNIS large bande. Elle peut notamment s'appliquer à la visiophonie et à la télésurveillance.

L'invention concerne d'autre part tous les dispositifs de stockage d'images, dont elle permet d'augmenter la capacité. Elle peut être utilisée par exemple dans les magnétoscopes, ainsi que dans tous les supports de bases de données, tels que les disques optiques.

Du fait de la multiplication des canaux numériques et de leur transparence vis à vis des données transmises, l'utilisation de canaux numériques pour la transmission d'images devrait s'accroître de façon notable dans les années à venir.

Le débit de transmission des différents réseaux numériques existants ne permet pas de transmettre des images animées en temps réel. Il convient donc de comprimer l'information contenue dans ces images, notamment en supprimant les redondances. De même, pour des raisons de taille de mémoire, il est intéressant de pouvoir réduire la place occupée par une image dans les différents moyens de stockage.

On connaît déjà des systèmes de compression d'images numériques.

De telles chaînes de traitement peuvent par exemple comprendre un découpage de l'image en blocs de quelques points d'image, et une transformation mathématique de chacun de ces blocs. Ce passage dans le domaine fréquentiel permet de réduire l'information à coder, en filtrant, suivant des critères psychovisuels, le spectre d'un bloc d'image. On sait en effet que certains coefficients du bloc transformé ont, d'un point de vue résultat visuel, moins d'importance que d'autres. Les coefficients sont ensuite quantifiés, puis codés, avant d'être transmis ou stockés.

De façon à réduire le nombre d'informations à quantifier, on peut utiliser des moyens de prédiction. On essaie de prédire, à partir du bloc précédent, le contenu du bloc courant, puis on détermine la différence entre le bloc prédit et le bloc réel, ou erreur de prédiction. On ne code alors que cette erreur, en général beaucoup moins riche en informations que le bloc réel. Le décodeur dispose des mêmes moyens de prédiction, afin de reconstituer le bloc.

On sait d'autre part que l'acuité visuelle de l'oeil humain varie en fonction de l'amplitude des mouvements. Plus précisément, l'acuité visuelle baisse sensiblement lorsque les mouvements sont importants. Il apparaît donc que la définition d'image nécessaire à la bonne vision d'une image dans laquelle l'amplitude des mouvements est importante est beaucoup plus faible que celle nécessaire pour une image sans mouvement. Ce critère psychovisuel est déjà pris en compte à certaines étapes des chaînes de compression d'images. Par contre, il n'est pas utilisé lors de la quantification.

L'invention a pour but de pallier cette carence.

Plus précisément, l'invention a pour objectif de fournir un système de compression d'images tenant compte d'un critère psychovisuel pour l'étape de compression du signal par quantification de coefficients transformés de blocs découpés dans l'image.

Un objectif complémentaire de l'invention est de fournir un système de compression d'images à quantification adaptative par critères multiples.

Un autre objectif de l'invention est de fournir des moyens de quantification adaptative de mise en oeuvre simple, notamment par la prise en compte lors de la quantification d'un critère psychovisuel déjà élaboré à une étape précédente du traitement de compression.

Ces objectifs, ainsi que d'autres qui apparaîtront par la suite, sont atteints à l'aide d'un système de compression d'images numériques appartenant à une séquence d'images, du type comprenant un module de codage de blocs d'image par transformation mathématique coopérant avec un module de quantification de la valeur de chaque coefficient des blocs d'image transformés, ledit module de quantification comprenant des moyens de calcul du nombre de niveaux de quantification des coefficients en fonction d'une information psychovisuelle.

De façon avantageuse, ladite information psychovisuelle est une information d'amplitude du mouvement associé audit bloc d'image.

Préférentiellement, lesdits moyens de calcul du nombre de niveaux de quantification agissent également en fonction d'une information de position de chaque coefficient à quantifier dans ledit bloc d'image transformé.

Selon un mode de réalisation préférentiel de l'invention, lesdits moyens de calcul du nombre de niveaux de quantification comprennent des moyens de sélection d'une matrice de facteurs de pondération parmi plusieurs matrices disponibles, chacun desdits facteurs de pondération correspondant à une information sur le nombre de niveaux de quantilication à appliquer à un desdits coefficients à quantifier en fonction de sa position dans ledit bloc d'image transformé.

Avantageusement, ladite information d'amplitude du mouvement est fournie par un module d'estimation du mouvement dans ladite image.

Ledit moyen d'estimation du mouvement coopère de façon avantageuse avec un module de choix de l'information à coder par transformation, entre d'une part le bloc d'image courant et d'autre part le bloc différentiel entre le bloc courant et le bloc antécédent dudit bloc courant dans l'image précédente, ledit choix étant effectué selon un critère du type de moindre énergie. Selon un mode de réalisation particulier de l'invention, ledit bloc différentiel contient la différence entre le bloc courant et une prédiction du bloc courant, à partir du bloc antécédent dudit bloc courant dans l'image précédente et d'informations de mouvement dans l'image.

Lorsque ledit système de compression d'images est du type associé à des moyens de transmission des images comprimées à travers un canal de transmission à débit limité, lesdits moyens de calcul du nombre de niveaux de quantification agissent avantageusement également en fonction du taux de remplissage d'un bloc tampon de régulation du débit de données.

De façon préférentielle, ladite transformation mathématique appartient au groupe comprenant:
- transformation discrète en cosinus ;
- transformation de Fourier ;
- transformation de Haar ;
- transformation de Hadamard.

Avantageusement, dans le cas d'une image de télévision comprenant une composante de luminance et au moins une composante de chrominance, ledit système comprend au moins deux chaînes de traitement comprenant lesdits modules de codage et de quantification, fonctionnant en parallèle, chacune desdites chaînes étant associée à une des composantes, ladite information de mouvement étant commune auxdites chaînes de traitement.

D'autres caractéristiques et avantages de l'invention apparaîtront à la lecture suivante d'un mode de réalisation préférentiel de l'invention, donné à titre illustratif et non limitatif, et des dessins annexés, dans lesquels : - la figure 1 est un schéma de principe d'un codeur selon l'invention, - la figure 2 est un schéma de principe d'un décodeur selon l'invention, - la figure 3 représente le schéma fonctionnel d'un mode de réalisation préférentiel de la quantification dans le codeur suivant l'invention, - la figure 4 présente le schéma fonctionnel d'un mode de réalisation préférentiel de la quantification inverse, dans le décodeur.

La transmission d'images sur des canaux numériques nécessite plusieurs étapes. Il faut tout d'abord numériser l'image. Il existe à cet effet des normes au niveau des organismes de radiodiffusion, telle que la recommandation 601 du CCIR. Il est ensuite nécessaire d'adapter le débit résultant de cette numérisation (216 Mbits/s dans le cas de l'image numérique définie dans la recommandation 601 du CCIR) à la capacité du canal. Cette adaptation du débit correspond au codage des images, à l'émetteur, et au décodage, au récepteur.

On connaît de nombreuses techniques de codage. D'une manière générale, le codage, ou réduction de débit, s'obtient en trois étapes. Il est tout d'abord nécessaire de représenter l'image de la manière la plus compacte possible en utilisant les redondances existantes dans l'image ou la séquence d'images. Ensuite, il faut quantifier, de manière généralement plus grossière, cette nouvelle représentation de l'image. Enfin, il faut attribuer à chaque valeur quantifiée un mot de code qui sera transmis et permettra au décodeur de reconstruire la suite d'images transmises.

La réduction de débit provient de l'ensemble de ces différentes étapes.

La première étape est réversible, c'est-à-dire que si on effectue l'opération inverse, on retrouve l'information d'origine. C'est l'étape de prédiction en codage prédictif (MICD), ou de transformation de l'image en codage par transformation temps-fréquence.

Dans le cas des techniques prédictives, on essaie de prédire pour chaque point à transmettre la valeur de ce point, à partir des points déjà transmis, de façon à ce que le décodeur puisse opérer de manière similaire. On effectue alors la différence entre le point à coder et la valeur prédite. Cette nouvelle valeur est appelée erreur de prédiction. Alors que les valeurs des points de l'image à coder sont sensiblement équiprobables, les valeurs des erreurs de prédiction sont bien moins nombreuses et fortement concentrées autour de la valeur 0.

En ce qui concerne les techniques de transformation, l'idée de base consiste à prendre une sous-image de l'image complète, et a effectuer sur cette sous-image une transformation mathématique réversible, telles que les transformations de Fourier, Haar ou Hadamard. L'intérêt est que, dans l'espace transformé, l'énergie est répartie sur un nombre beaucoup plus faible de points.

Actuellement, la transformation la plus couramment utilisée est la transformation discrète en cosinus (DCT). Une des raisons de son emploi, en plus de bonnes caractéristiques d'efficacité en terme de compression, est l'existence d'un circuit intégré effectuant le calcul de cette opération en temps réel pour la télévision, à une fréquence d'horloge de 13,5 MHz, sur des blocs de taille 4 par 4 jusqu'à 16 par 16.

On connaît également le codage en sous-bandes, méthode basée sur le découpage en bande de fréquences de l'image d'origine par des bancs de filtres numériques, tels que des filtres miroir. Cela permet d'exploiter le fait que la majeure partie de l'information est contenue dans les bandes de fréquences faibles.

Ces différentes méthodes, ainsi que d'autres, peuvent être combinées. Il est par exemple possible de subdiviser l'image en blocs de 8 points par 8 lignes, puis de réaliser pour chacun des blocs une prédiction temporelle, en fonction des blocs de l'image précédente mis en mémoire, et enfin d'effectuer sur les blocs obtenus par différence temporelle, ou prédiction temporelle, une transformation discrète en cosinus.

Ce type de codage est appelé codage hybride.

La seconde étape, la quantification, est irréversible : une partie de l'information est définitivement perdue, mais de préférence là où sa perte sera le moins visible.

La quantification consiste à attribuer à un ensemble de valeurs dans un certain espace une valeur unique, ou représentant, de façon irréversible, la valeur avant quantification étant alors perdue.

Cette attribution de représentants peut se faire de manière systématique (quantification fixe) ou variable en fonction du contexte local (quantification adaptative).

On distingue principalement deux types de quantification : quantification scalaire, dans un espace à une dimension, et quantification vectorielle, dans un espace à plus d'une dimension. Dans le cas de la quantification scalaire, existent les quantifications linéaire, ou uniforme, et non linéaire.

La troisième étape, l'attribution de mots de code aux valeurs quantifiées, est également réversible. Le débit peut être réduit par l'utilisation de codes à longueur variable qui attribuent des mots de code de longueur la plus courte aux événements les plus fréquents. Un exemple de ce type de code est le code de Huffman. Dans ce cas, on attribue aux valeurs qui apparaissent le plus souvent des codes de longueur courte, les valeurs apparaissant moins souvent ayant en contrepartie une longueur de mot code supérieure. En moyenne, mais au prix d'une complexité accrue, le débit est inférieur à celui d'un code à longueur fixe.

Les techniques de codage les plus évoluées et les plus couramment utilisées à l'heure actuelle utilisent les techniques de transformation discrète en cosinus, l'estimation de la compensation de mouvement pour la prédiction temporelle, et des codes à longueur variable.

De tels systèmes sont actuellement proposés à la normalisation de la transmission de la télévision numérique sur des canaux à 34 Mbit/s (CMTT/2-DCT group chairman report) et pour les systèmes de visioconférence à 384 Kbit/s (description of reference model 6).

Le système suivant l'invention est compatible avec ces normes.

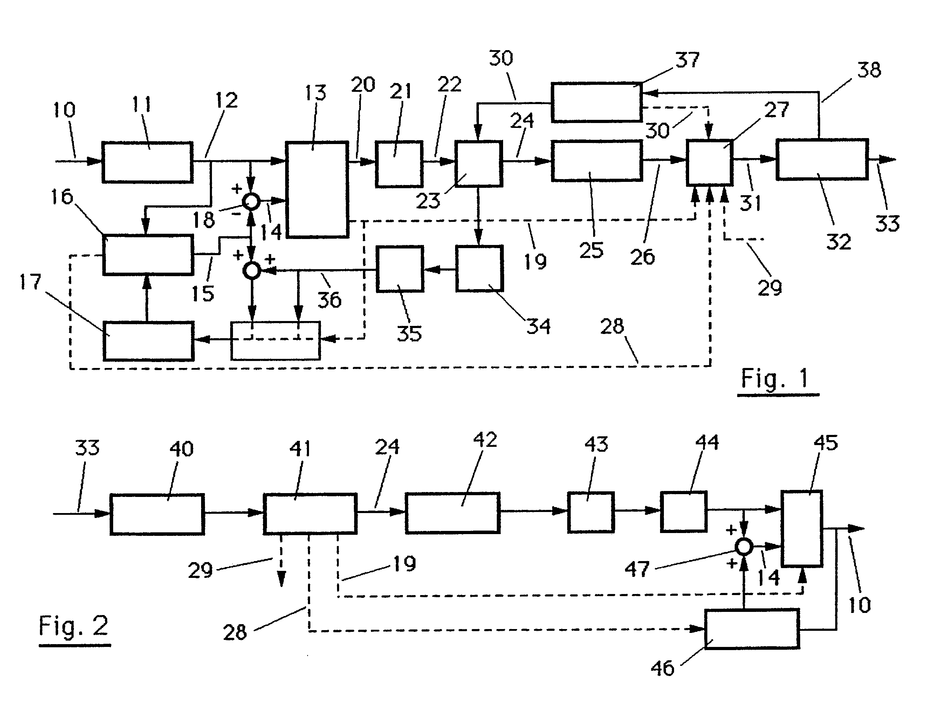

La figure 1 est le schéma d'un codeur suivant l'invention, à base de transformation cosinus, de compensation de mouvement et de quantification adaptative. Dans ce codeur, le signal vidéo 10 numérique à transmettre est découpé en blocs, par le module de mise en blocs 11. Ce module réalise, à partir de l'analyse de l'image par lignes, des blocs 12 de taille 8 points par 8 lignes.

Chaque bloc 12 est ensuite transmis à un module de choix 13 du bloc à transmettre, entre le bloc spatial 12, ou bloc à coder, et le bloc temporel 14, correspondant au bloc différentiel entre le bloc à transmettre et le bloc 15 fourni par le module d'estimation du mouvement 16.

Ce module d'estimation du mouvement 16 recherche, à partir de l'image précédente mémorisée dans la mémoire 17, le meilleur correspondant du bloc à coder, selon un certain critère. Il s'agit donc d'une prédiction du bloc à coder, en fonction du bloc précédent. Dans ce mode de réalisation préférentiel, on utilise une prédiction dans le sens du mouvement, connue sous le nom de block matching.

Le comparateur 18 fournit au module de choix 13 la différence 14 entre le bloc à transmettre 12 et le bloc estimé 15. Il est clair que, si le critère de prédiction est efficace, cette différence est dans la plupart des cas faible. Il est donc alors plus économique, en terme de débit, de ne transmettre que cette différence

4

14. Dans certains cas cependant, le bloc spatial 12 contient moins d'informations à transmettre que le bloc temporel 14, notamment lors des transitions. Le module de choix 13 sélectionne a priori le bloc contenant l'énergie la plus faible. L'indication du choix 19 est transmise au décodeur.

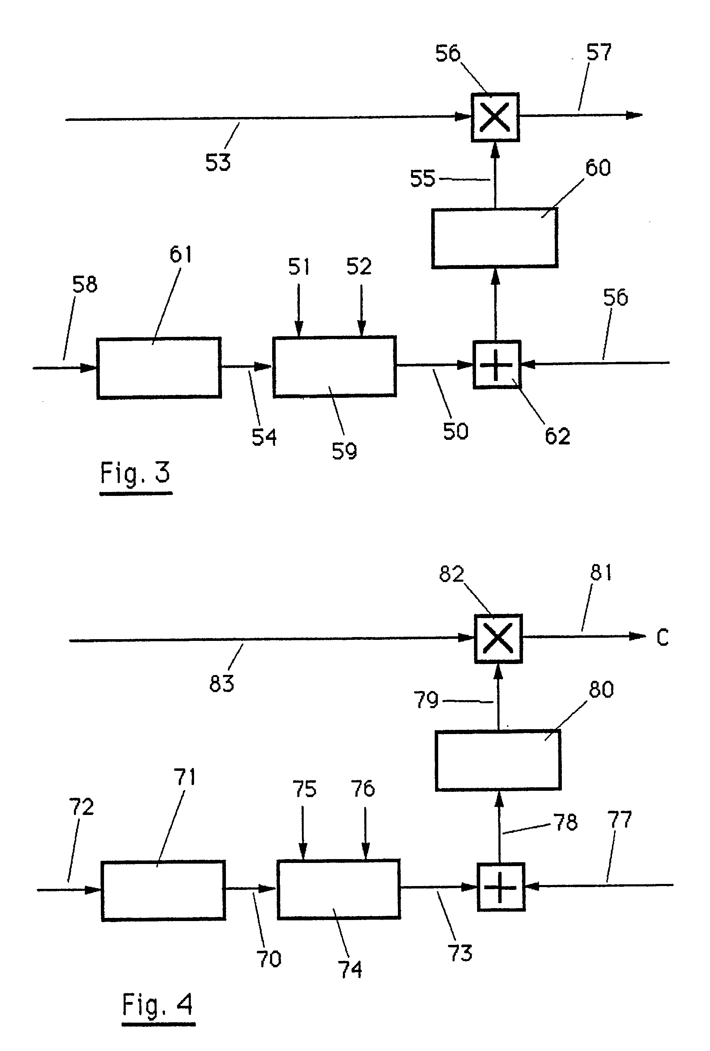

Le bloc sélectionné 20 est ensuite transmis au module de transformation discrète en cosinus 21. Chaque coefficient 22 de la matrice transformée est quantifié par le module de quantification 23, dont le fonctionnement est détaillé en liaison avec la figure 3.

Les valeurs quantifiées 24 sont ensuite codées, par le module de codage 25, qui attribue à chaque valeur un mot de code 26 de longueur variable. On utilise ici un code de Huffman.

Ces mots de code 26 sont multiplexés par le multiplexeur 27 avec les données d'assistance à transmettre, telles que le choix 19 qui a été fait par le module de choix 13, les vecteurs de mouvement 28 fournis par le module d'estimation de mouvement 16, les informations de couleurs 29, et le facteur de régulation 30.

Les données 31 sont alors transmises à un module tampon 32, qui a pour rôle de réguler le débit, en prenant les données issues du codage à un débit variable, et en les ressortant à un débit fixe, le débit de transmission.

Ces données 33 sont alors transmises, pour les systèmes de transmission, ou mémorisées, pour les systèmes de stockage.

Un module de quantification inverse 34 et un module de transformée inverse 35 permettent d'obtenir le bloc 36 tel qu'il sera obtenu dans le décodeur. C'est le bloc 36, et non le bloc réel 12, qui est conservé en mémoire 17. Ainsi, le module 16 d'estimation du mouvement fournit le même bloc prédit 15 que le module d'estimation du décodeur.

Le facteur de régulation 30 est fourni par le module de régulation 37, en fonction d'une indication 38 du taux de remplissage du tampon 32.

La figure 2 est le schéma d'un décodeur réalisant les opérations inverses de celles du codeur de la figure 1.

Un tampon de réception 40 reçoit les données 33, qui sont ensuite démultiplexées par le démultiplexeur 41. Les données 24 concernant les blocs d'images sont transmises à un module de décodage 42, puis à un module de quantification inverse 43 et enfin à un module de transformation inverse 44. Les données de choix 19 entre le bloc réel et le bloc différentiel sont transmises au module de choix 45. Les données 28 concernant le mouvement sont mémorisées dans la mémoire 46, de même que l'image précédente. Il est ainsi possible de recréer, par le sommateur 47, le bloc différentiel 14.

La figure 3 présente le schéma fonctionnel des moyens de quantification 23 de la figure 1.

La quantification utilisée est une quantification scalaire : chaque coefficient est quantifié indépendamment des autres, et linéaire : le pas de quantilication est constant quelle que soit l'amplitude du coefficient.

La quantification s'effectue en trois étapes : détermination d'un facteur de pondération 50, fonction de la position 51,52 du coefficient $c_{i,j}$ 53 dans le bloc transformé et d'un indice de mouvement 54, calcul d'un pas de quantification 55, tenant compte du facteur de pondération 50 et d'un facteur de régulation du débit 56, et calcul du niveau de quantification 57 par multiplication 56 du coefficient $c_{i,j}$ 53 par l'inverse du pas de quantification 55.

Il existe déjà des systèmes de compression d'images utilisant une matrice de pondération mémorisant des facteurs de pondération. En revanche, il n'existe pas de tels systèmes prenant en compte l'amplitude du mouvement. Dans le système selon l'invention, le calcul du pas de quantification 55 du coefficient de coordonnées i 51 et j 52 est fonction des composantes 58 du vecteur de mouvement. La solution retenue est de disposer de plusieurs matrices de pondération. On change alors de matrice de pondération en fonction de l'amplitude du mouvement.

Le calcul du pas de quantification 55 est fait dans le module 60, selon l'équation :

$$p(i,j) = 2^{(M(i,j,k) + f)}$$

où $p(i,j)$ est le pas de quantification 55 du coefficient $c_{i,j}$ 53 ;

$M(i,j,k)$ est le facteur de pondération 50 pour le coefficient $c_{i,j}$ 53 et l'indice de mouvement k 54 ;

f est le facteur de régulation 56.

Dans ce mode de réalisation préférentiel, on utilise trois matrices de pondération, correspondant aux mouvements faibles, moyens et forts. Les tableaux 1 à 3 présentent ces trois matrices de pondération. Les facteurs de pondération 50 varient entre 0 et 44. Ils sont donc codés sur 6 bits.

Ces matrices sont contenues dans une mémoire 59, dont les entrées sont codées sur 8 bits : 3 bits pour i 51 (8 valeurs), 3 bits pour j 52 (8 valeurs) et 2 bits pour k 54 (3 valeurs).

L'indice de mouvement k 54 est déterminé par le module 61, à partir de l'estimation de mouvement 58 fournie par le module d'estimation du mouvement 13.

L'estimation de mouvement 58 fournit un vecteur sous forme de deux composantes vx (composante horizontale du mouvement) et vy (composante verticale).

L'amplitude maximale du mouvement est de ± 7,5 points en horizontal et vertical avec une précision au demi-pas d'échantillonnage.

Il y a donc 15 valeurs possibles de vx et de vy. Chacun des deux est donc codé sur 5 bits.

Le tableau 4 présente ces 15 valeurs, ainsi que l'indice de mouvement correspondant.

L'indice global de mouvement 54 est le minimum des 2 indices corespondant à vx et vy. Il est obtenu directement par adressage d'une mémoire 61, 10 bits d'entrées correspondant à vx et vy, 2 bits de sortie correspondant à l'indice de mouvement 54.

La valeur du facteur de pondération 56 (variant entre 0 et 44) est ajoutée dans le sommateur 62 au facteur de régulation (variant entre -24 et 59), et la somme est donc codée sur 7 bits.

Cette valeur est adressée à une table 60 qui fournit l'inverse de la valeur du pas de quantiflcation 55 (sur 12 bits). Le niveau de quantification 57 est alors obtenu par multiplication 56 du coefficient $c_{i,j}$ 53 par l'inverse du pas de quantification 55.

La figure 4 représente le schéma fonctionnel des moyens de quantification inverse 43 au décodage. Ces moyens réalisent les opérations inverses de celles des moyens de quantification de la figure 3.

L'indice du mouvement 70 est obtenu, comme au codeur, par adressage d'une table 71 en fonction des composantes vx et vy 72 du vecteur de mouvement, qui est transmis au décodeur.

Le facteur de pondération 73 est alors déterminé, par adressage d'une table 74, en fonction des indices i et j 75, 76 de position du coefficient dans le bloc, et de l'indice de mouvement k 70.

La valeur du facteur de pondération 73 (variant entre 0 et 44) est ajoutée au facteur de régulation 77 (variant entre -24 et 59) et la somme 78 est donc codée sur 7 bits.

Ensuite le pas de quantilication 79, préalablement mis en mémoire 80, est simplement obtenu par adressage de la somme 78 du facteur de régulation et du facteur de pondération.

Enfin la valeur quantifiée 81 est obtenue par multiplication 82 du niveau de quantification 83 et du pas de quantification 79.

Dans le cas d'une image de télévision, comprenant par exemple une composante de luminance et au moins une composante de chrominance, il est possible d'utiliser, au codage comme au décodage, plusieurs chaînes de traitement telles que décrites précédemment, tavaillant en parallèle, chacune traitant une composante. Les informations issues de chacune des chaînes sont alors multiplexées avant d'être émises ou stockées.

Afin de simplifier les codeur et décodeur, on utilise dans ce cas la même information d'estimation du mouvement, pour chacune des chaînes de traitement, déterminée par exemple sur la composante de luminance.

TABLEAU 1

| FACTEUR DE PONDÉRATION POUR LES MOUVEMENTS FAIBLES (K = 0) | | | | | | | | |
|---|---|---|---|---|---|---|---|---|
| indice i | 1 | 2 | 3 | 4 | 5 | 6 | 7 | 8 |
| indice j | | | | | | | | |
| 1 | 0 | 0 | 2 | 8 | 12 | 18 | 22 | 28 |
| 2 | 0 | 6 | 6 | 10 | 16 | 18 | 22 | 34 |
| 3 | 0 | 6 | 10 | 14 | 18 | 20 | 24 | 38 |
| 4 | 2 | 6 | 12 | 16 | 18 | 20 | 26 | 40 |
| 5 | 6 | 12 | 14 | 16 | 20 | 22 | 28 | 42 |
| 6 | 10 | 14 | 14 | 18 | 22 | 24 | 30 | 42 |
| 7 | 14 | 16 | 16 | 18 | 22 | 24 | 34 | 44 |
| 8 | 14 | 18 | 18 | 20 | 24 | 30 | 38 | 44 |

TABLEAU 2

| FACTEUR DE PONDÉRATION POUR LES MOUVEMENTS MOYENS (K = 1) | | | | | | | | |
|---|---|---|---|---|---|---|---|---|
| indice i | 1 | 2 | 3 | 4 | 5 | 6 | 7 | 8 |
| indice j | | | | | | | | |
| 1 | 0 | 0 | 2 | 8 | 12 | 18 | 44 | 44 |
| 2 | 0 | 6 | 6 | 10 | 16 | 44 | 44 | 44 |
| 3 | 0 | 6 | 10 | 14 | 18 | 44 | 44 | 44 |
| 4 | 2 | 6 | 12 | 16 | 44 | 44 | 44 | 44 |
| 5 | 6 | 12 | 14 | 16 | 44 | 44 | 44 | 44 |
| 6 | 10 | 14 | 14 | 18 | 44 | 44 | 44 | 44 |
| 7 | 14 | 16 | 16 | 18 | 44 | 44 | 44 | 44 |
| 8 | 14 | 18 | 18 | 20 | 44 | 44 | 44 | 44 |

TABLEAU 3

| FACTEUR DE PONDÉRATION POUR LES MOUVEMENTS FORTS (K = 2) | | | | | | | | |
|---|---|---|---|---|---|---|---|---|
| indice i | 1 | 2 | 3 | 4 | 5 | 6 | 7 | 8 |
| indice j | | | | | | | | |
| 1 | 0 | 0 | 2 | 8 | 44 | 44 | 44 | 44 |
| 2 | 0 | 6 | 6 | 10 | 44 | 44 | 44 | 44 |
| 3 | 0 | 6 | 10 | 44 | 44 | 44 | 44 | 44 |
| 4 | 2 | 6 | 44 | 44 | 44 | 44 | 44 | 44 |
| 5 | 6 | 12 | 44 | 44 | 44 | 44 | 44 | 44 |
| 6 | 10 | 14 | 44 | 44 | 44 | 44 | 44 | 44 |
| 7 | 14 | 44 | 44 | 44 | 44 | 44 | 44 | 44 |
| 8 | 14 | 44 | 44 | 44 | 44 | 44 | 44 | 44 |

TABLEAU 4

| INDICE DE MOUVEMENT K EN FONCTION DE L'AMPLITUDE DU MOUVEMENT | | |
|---|---|---|
| vx ou vy | | indice de mouvement |
| amplitude | valeur | |
| -7,5 | 00000 | 2 |
| ... | ... | ... |
| -2,0 | 01011 | 2 |
| -1,5 | 01100 | 1 |
| -1,0 | 01101 | 1 |
| -0,5 | 01110 | 0 |
| 0 | 01111 | 0 |
| 0,5 | 10000 | 0 |
| 1,0 | 10001 | 1 |
| 1,5 | 10010 | 1 |
| 2,0 | 10011 | 2 |
| ... | ... | ... |
| 7,5 | 11110 | 2 |

## Revendications

1. Système de compression d'images numériques appartenant à une séquence d'images, du type comprenant un module (21) de codage de blocs d'image (20) par transformation mathématique coopérant avec un module (23) de quantification de la valeur de chaque coefficient (22;53) des blocs d'image transformés,
caractérisé en ce que ledit module (23) de quantilication comprend des moyens de calcul (59,60) du nombre de niveaux de quantification (55) des coefficients (22;53) en fonction d'une information psychovisuelle.

2. Système suivant la revendication 1, caractérisé en ce que ladite information psychovisuelle est une information d'amplitude (54) du mouvement associé audit bloc d'image (20).

3. Système suivant l'une quelconque des revendications 1 et 2, caractérisé en ce que lesdits moyens de calcul (59,60) du nombre de niveaux de quantification (55) agissent également en fonction d'une information (51,52) de position de chaque coefficient (22;53) à quantifier dans ledit bloc d'image transformé.

4. Système suivant la revendication 3, caractérisé en ce que lesdits moyens de calcul (59,60) du nombre de niveaux de quantification (55) comprennent des moyens (59) de sélection d'une matrice de facteurs de pondération (50) parmi plusieurs matrices disponibles, chacun desdits facteurs de pondération (50) correspondant à une information sur le nombre de niveaux de quantification à appliquer à un desdits coefficients (22;53) à quantifier en fonction de sa position (51,52) dans ledit bloc d'image transformé.

5. Système suivant l'une quelconque des revendications 1 à 4, caractérisé en ce que ladite information d'amplitude (54) du mouvement est fournie par un module (61) d'estimation du mouvement dans ladite image.

6. Système suivant la revendication 5, caractérisé en ce que ledit module (61) d'estimation du mouvement dans ladite image coopère avec un module de choix (13) de l'information à coder par transformation, entre d'une part le bloc d'image courant (12) et d'autre part le bloc différentiel (14) entre le bloc courant et le bloc antécédent dudit bloc courant dans l'image précédente, ledit choix étant effectué selon un critère du type de moindre énergie.

7. Système suivant la revendication 6, caractérisé en ce que ledit bloc différentiel (14) contient la différence entre le bloc courant (12) et une prédiction (15) du bloc courant, à partir du bloc antécédent dudit bloc courant dans l'image précédente et d'informations de mouvement dans l'image.

8. Système suivant l'une quelconque des revendications 1 à 7, du type associé à des moyens de transmission des images comprimées à travers un canal de transmission à débit limité, caractérisé en ce que lesdits moyens de calcul (59,60) du nombre de niveaux de quantification (55) agissent également en fonction du taux de remplissage (30;56) d'un bloc tampon (32) de régulation du débit de données.

9. Système suivant l'une quelconque des revendications 1 à 8, caractérisé en ce que ladite transformation mathématique (21) appartient au groupe comprenant:
- transformation discrète en cosinus ;
- transformation de Fourier ;
- transformation de Haar ;
- transformation de Hadamard.

10. Système suivant l'une quelconque des revendications 1 à 9, caractérisé en ce que, dans le cas d'une image de télévision comprenant une composante de luminance et au moins une composante de chrominance, ledit système comprend au moins deux chaînes de traitement comprenant lesdits modules de codage (21) et de quantification (23), fonctionnant en parallèle, chacune desdites chaînes étant associée à une des composantes, et en ce que ladite information de mouvement est commune auxdites chaînes de traitement.

Fig. 2

Fig. 1

Fig. 3

Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2173067 (NEC CORPORATION) <br> * page 1, ligne 78 - page 2, ligne 32; figures 1-3 * <br><br> ----- | 1 | H04N7/13 |
| | | | **DOMAINES TECHNIQUES RECHERCHES (Int. Cl.5)** |
| | | | H04N7/00 |

Le présent rapport a été établi pour toutes les revendications

| Lieu de la recherche | Date d'achèvement de la recherche | Examinateur |
|---|---|---|
| BERLIN | 20 DECEMBRE 1990 | DUDLEY C. |

EPO FORM 1503 03.82 (P0402)